# EUROPEAN PATENT APPLICATION

(11) **EP 2 523 120 A1**
(43) Date of publication of application: **14.11.2012**
(21) Application number: 11165893.6
(22) Date of filing: 12.05.2011
(51) Int. Cl.: G06F 15/78, G06F 1/32, G06F 9/50

(54) **Microcomputer architecture for low power efficient baseband processing**

(71) Applicant: IMEC, 3001 Leuven (BE)
(72) Inventor: Hartmann, Matthias, 3000, Leuven (BE); Li, Min, 3001, Leuven (BE); Vander AA, Tom, 3061, Leefdaal (BE); Raghavan, Praveen, 620006, Tamil Nady (IN)
(74) Representative: Hertoghe, Kris Angèle Louisa

(57) **Abstract**

The present invention provides a microcomputer architecture for executing an application. The microcomputer architecture comprises a plurality of functional units (26, 27), optionally register files (29, 35), and memories (34, 36) arranged so as to form a coarse grain array (22), and at least one processing unit (40, 41) supporting multiple threads of control. The at least one processing unit (40, 41) is adapted for allowing each thread of control to claim one or more of the functional units to work for that thread depending on requirements of the application, e.g. workload, and/or the environment, e.g. current usage of FU's. This way, the present invention provides multithreading with dynamic allocation of CGA resources. Based on the demand of the application and the current utilization of the CGRA, different resource combinations can be claimed.

## Description

### Field of the invention

The present invention relates to a microcomputer architecture with reduced power consumption and performance enhancement, and to methods of designing and operating the same.

### Background of the invention

Nowadays, a typical embedded system requires high performance to perform tasks such as video encoding/decoding at run-time. It should consume little energy so as to be able to work hours or even days using a lightweight battery. It should be flexible enough to integrate multiple applications and standards in one single device. It has to be designed and verified in a short time to market despite substantially increased complexity. The designers are struggling to meet these challenges, which call for innovations of both architectures and design methodology.

Coarse-grained reconfigurable architectures (CGRAs) are emerging as potential candidates to meet the above challenges. Many designs have been proposed in recent years. These architectures often comprise tens to hundreds of functional units (FUs), which are capable of executing word-level operations instead of bit-level ones found in common field programmable gate arrays (FPGAs). This coarse granularity greatly reduces the delay, area, power and configuration time compared with FPGAs. On the other hand, compared with traditional "coarse-grained" programmable processors, their massive computational resources enable them to achieve high parallelism and efficiency. However, existing CGRAs have not yet been widely adopted mainly because of programming difficulty for such a complex architecture.

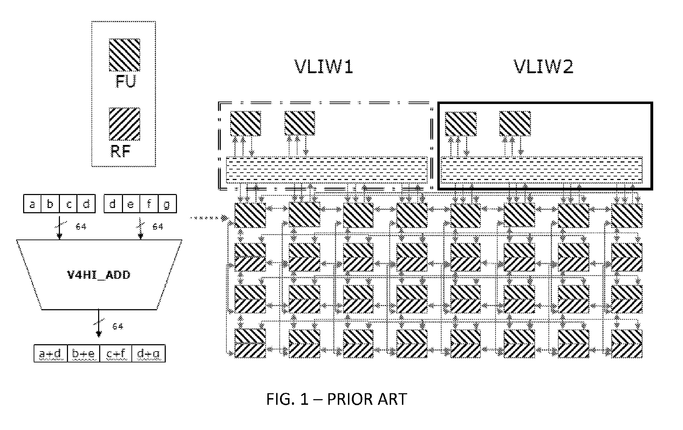

To address this problem, B. Mei et al., in "ADRES: An Architecture with Tightly Coupled VLlW Processor and Coarse-Grained Reconfigurable Matrix", 13th International Conference on Field-Programmable Logic and Applications location, have proposed an architecture with tightly coupled very long instruction word (VLlW) processor and coarse-grained reconfigurable matrix, called ADRES architecture (Architecture of Dynamically Reconfigurable Embedded Systems)- see FIG. 1. The ADRES architecture and its compiler offer high instruction-level parallelism to applications by means of a sparsely interconnected array of functional units and register files, as illustrated in FIG. 1. The ADRES architecture template is a datapath-coupled coarse-grained reconfigurable matrix. As a template, ADRES can have various number of VLIW (Very Large Instruction Word) functional units and a CGRA comprising various numbers of functional units. Applications running on an ADRES architecture are partitioned by a compiler into control-intensive code and computation-intensive kernels. The control-intensive fraction of the application is executed on the VLIW, while the computation-intensive parts, the loops or kernels are modulo-scheduled on the CGRA. By seamlessly switching the architecture between the VLlW mode and the CGRA mode at run-time, statically partitioned and scheduled applications can be run on the ADRES with a high number of instructions per clock.

### Summary of the invention

It is an object of embodiments of the present invention to provide a good microcomputer architecture as well as methods of operating the same. An advantage of embodiments of the present invention is reduced power consumption.

The above objective is accomplished by a method and device according to the present invention.

In a first aspect, the present invention provides a microcomputer architecture for executing an application. The microcomputer architecture comprises a plurality of functional units, optionally register files, and memories arranged so as to form a coarse grain array, and at least one processing unit supporting multiple threads of control. The at least one processing unit may be a VLlW processor. At least one processing unit is adapted for allowing each thread of control to claim one or more of the functional units to work for that thread. It is a particular feature of embodiments of the present invention that at least one processing unit is adapted for allowing the threads of control to claim functional units to work for that thread depending on requirements of the application, e.g. workload, and/or the environment, e.g. current usage of FU's. This way, the present invention provides multithreading with dynamic allocation of CGA resources. Based on the demand of the application and the current utilization of the CGRA, different resource combinations can be claimed.

In a microcomputer architecture according to embodiments of the present invention, the processing unit adapted for allowing the threads of control to claim functional units may include claiming particular types of functional units depending on requirements of the application and the environment. This is heterogeneous resource claiming, where heterogeneous functional units may for example have different instruction sets. As an example only, threads requiring mostly scalar operations and lower memory may claim other types of functional units than threads which are highly vector intensive and/or highly memory bandwidth intensive in their requirements.

In a microcomputer architecture according to embodiments of the present invention, wherein the processing unit adapted for allowing the threads of control to claim functional units may include claiming a particular number of functional units depending on requirements of the application and the environment.

In a microcomputer architecture according to embodiments of the present invention, a set of functional units, optionally register files, and memories may belong to a particular DVFS domain, and the voltage and frequency of this domain can be controlled independently of another domain. Hence when a processing unit claims a resource, it can also set the voltage and frequency of the appropriate domains it claims. Again, in accordance with embodiments of the present invention, the selection of a particular DVFS domain by a processing unit may be based on demand of the application and on current utilization of the CGRA. Different DVFS domains can be claimed by different threads. This means that different threads can simultaneously run, on a same CGRA, at different DVFS domains.

In a microcomputer architecture according to any embodiments of the present invention, a set of functional units, optionally register files, and memories may belong to a particular adaptive body biasing domain, and the body biasing of this domain can be controlled independently of the body biasing of another domain. Hence when a processing unit claims a resource, it can also set the body biasing of the appropriate domains it claims. Again, in accordance with embodiments of the present invention, the selection of a particular body biasing domain by a processing unit may be based on demand of the application and on current utilization of the CGRA. Different body biasing domains can be claimed by different threads. This means that different threads can simultaneously run, on a same CGRA, at different body biasing domains.

In a microcomputer architecture according to embodiments of the present invention, a set of functional units, optionally register files, and memories may belong to a power domain which can be switched on and off independently of another domain. The power domains may be adapted to be power gated to go to a low leakage mode.

In a microcomputer architecture according to embodiments of the present invention, the processing unit may be adapted for allowing each thread of control to reconfigure the claiming of one or more of the functional units to work for that thread at runtime. This means that resources for a configured stream can be reconfigured at runtime, depending on the requirements of the application and/or the current workload. The reconfiguration may enable run-time adaptation of a same algorithm, where several versions of the same algorithm representing a trade-off, e.g. a Pareto trade-off, between two parameters, e.g. energy and time, are available.

In a microcomputer architecture according to embodiments of the present invention, the processing unit may be adapted for supporting multi-stream capability.

A microcomputer architecture according to embodiments of the present invention may be adapted for having the claimed functional units for one thread of control to operate independently from the claimed functional units for another thread of control.

In a second aspect, the present invention provides a method for executing on a system comprising a plurality of functional units arranged so as to form a coarse grain array an application having multiple threads of control. The method comprises monitoring a runtime, e.g. current, situation of the system with respect to the occupation of the functional units, and, based on the occupation of the functional units and on application requirements, allowing the threads of control to claim different functional units to work for that thread. This may include selecting a different version of a precompiled software and loading this different version of the software to the configuration memory on the CGRA to execute.

A method according to embodiments of the present invention may furthermore comprise, when the runtime situation changes, selecting another precompiled version of the same application that suits better the current situation needs.

In a method according to embodiments of the present invention, allowing the threads of control to claim different functional units to work for that thread may include claiming sets of functional units to work in an instruction level parallelism (ILP) fashion, a thread level parallelism (TLP) fashion, a data level parallelism (DLP) fashion or a mix of two or more of these fashions.

In a third aspect, the present invention provides a run-time engine adapted for monitoring a system comprising a plurality of functional units arranged so as to form a coarse grain array. The monitored system runs an application having multiple threads of control loaded on the CGRA for execution. The run-time engine is adapted for monitoring the system with respect to the current occupation of the functional units and application requirements, and based on the occupation of the functional units and on the application requirements, selecting different functional units to work for a thread of control.

In a further aspect, the present invention provides a method for converting application code into execution code suitable for execution on a microcomputer architecture as in any of the embodiments of the first aspect. The method comprises: obtaining application code, the application code comprising at least a first and a second thread of control, and converting at least part of said application code for the at least first and second thread of control, said converting including providing different versions of code for making use of different sets of resources, and insertion of selection information into each thread of control, the selection information being for selecting a different version of code, depending on requirements of the application and a particular occupation of the functional units.

In yet another aspect, the present invention also provides a method for executing an application on a microcomputer architecture as defined in any of the embodiments of the first aspect. The method comprises executing the application on the microcomputer architecture as at least two process threads on a first set of at least two non-overlapping processing units; depending on the current occupation of functional units in the first set of at least two non-overlapping processing units and on requirements of the application, dynamically switching the microcomputer architecture into a second set of at least two non-overlapping processing units, the second set being different from the first set; and executing the at least two process threads of the application on the second set of at least two processing units.

A method for executing an application according to embodiments of the present invention may furthermore comprise controlling each processing unit by a separate memory controller.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 illustrates a prior art microprocessor architecture.
FIG. 2 illustrates a microcomputer architecture with different types of functional units (scalar and vector).
FIG. 3 illustrates execution of two threads on a microcomputer architecture in accordance with embodiments of the present invention.
FIG. 4 illustrates a mix of ILP, DLP and TLP in a coarse-grained array of FUs in accordance with embodiments of the present invention.
FIG. 5 illustrates heterogeneous selected sets of resources, based on requirements of an application to be executed an on the current usage of FUs in the CGRA, in accordance with embodiments of the present invention.
FIG. 6 illustrates a microcomputer architecture according to embodiments of the present invention, having different power and DVFS domains in the CGRA.
FIG. 7 illustrates a first example of claimed power/DVFS resources for two threads, the unused resources being power gated.
FIG. 8 illustrates a second example of claimed power/DVFS resources for two threads, the unused resources being power gated.
FIG. 9 illustrates runtime selection of resources based on current system usage and requirements of an application to be executed, in accordance with embodiments of the present invention.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

A microcomputer architecture according to embodiments of the present invention is a CGRA architecture comprising two distinct parts for the datapath: VLlW parts and CGRA parts. In a microcomputer architecture according to embodiments of the present invention, a very long instruction word (VLlW) digital signal processor (DSP) is combined with a 2-D coarse-grained heterogeneous reconfigurable array (CGRA), which is extended from the VLIWs datapath. VLIW architectures execute multiple instructions per cycle, packed into a single large "instruction word" or "packet", and use simple, regular instruction sets. The VLlW DSP efficiently executes control-flow code by exploiting instruction-level parallelism (ILP) of 1 or more FU's. The array, containing many functional units, accelerates data-flow loops by exploiting high degrees of loop-level parallelism (LLP). The architecture template allows designers to specify the interconnection, the type and the number of functional units.

The CGRA template according to embodiments of the present invention thus tightly couples a very-long instruction word (VLlW) processor 21 and a coarse-grained array 22 by providing two functional modes on the same physical resources. It brings advantages such as high performance, low communication overhead and easiness of programming. An application written in a programming language such as e.g. C can be quickly mapped onto a CGRA instance according to embodiments of the present invention.

The CGRA according to embodiments of the present invention is a flexible template instead of a concrete instance. An architecture description language is developed to specify different instances. A script-based technique allows a designer to easily generate different instances by specifying different values for the communication topology, supported operation set, resource allocation and/or timing of the target architecture. Together with a retargetable simulator and compiler, this tool- chain allows for architecture exploration and development of application domain specific processors. As CGRA instances according to embodiments of the present invention are defined using a template, the VLIW width, the array size, the interconnect topology, etc. can vary depending on the use case.

The CGRA template according to embodiments of the present invention includes many basic components, including computational, storage and routing resources. The CGRA part is an array of computational resources and storage interconnected in a pre-described way. The computational resources are functional units (FUs) 26, 27, 28 that are capable of executing a set of word-level operations selected by a control signal. The functional units 26, 27, 28 can be heterogeneous (in terms of instructions supported in one functional unit, SIMD size, connectivity to other functional units, etc.), or they can be homogeneous. They are connected in a pre-determined way by means of routing resources (not illustrated). Each functional unit can internally have many SIMD slots to operate on different data in parallel on a same instruction. The CGA array also comprise transition nodes or pipeline registers between the different functional units as well as register files to store intermediate data. Each of the functional units and the interconnect can be configured at every cycle to execute another instruction. The CGRA functional units can be of many types, for example scalar, vector, pack /unpack, load/store type etc. The scalar units do not support high SIMD and are meant to operate on data that have limited SIMD like address calculation or other such operations. The vector FUs support SIMD and can do data crunching in parallel.

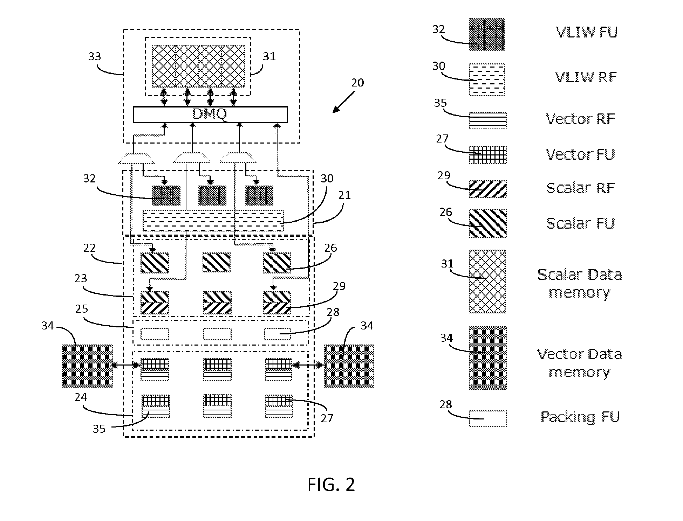

Data storages such as register files (RFs) 29, 30, 35 and memory blocks 31 can be used to store intermediate data. The routing resources (not illustrated in FIG. 2) include wires, multiplexers and busses. A CGRA instance according to embodiments of the present invention thus comprises functional units 26, 27, 28, registers files 29, 30, 35 and routing resources such as busses and multiplexers to connect the functional units and the register files. Basically, computational resources (FUs) 26, 27, 28 and storage resources(e.g. RFs 29, 30, 35 or memory blocks 31, 34) are connected in a certain topology by the routing resources to form an instance of a CGRA array. The whole array according to embodiments of the present invention has two functional modes: the VLlW processor 21 and the reconfigurable array 22, as indicated by the dashed lines in Fig. 2. These two functional modes 21, 22 can share physical resources because their executions will never overlap thanks to a processor/co-processor model. The processor operates either in VLIW mode or in CGA mode. The global data register files 30 are used in both modes and serve as a data interface between both modes, enabling an integrated compilation flow.

Also the data memory can be of two types: scalar memory and vector memory. The vector memories can also be of different sizes in both depth and/or width of the vector size. The data memories may be connected directly to the FUs that support load/store or may be connected to the FUs via a data memory queue (DMQ). The DMQ is used to hide a bank conflict latency in case many functional units try to access data from a same bank in parallel. Data memories can be local to a thread or global shared across different threads.

The L2 instruction memory may also comprise two parts (one for CGA and one for VLlW instructions). Alternatively, it may comprise one part only (combined VLlW and CGA instructions). The L1 instruction memory comprises two parts: one for the VLlW and one for the CGA instructions. L1 instruction memory for the CGA is called "configuration memory". There is a further level 0 or L0 instruction memory for the CGA, which is called "configuration cache". The "configuration memory" comprises the instructions for one mode of the program (so several loops) and the "configuration cache" only comprises instructions for one of two loops.

Each VLlW part is a multi-issue or a single issue processor which can interface with the rest of the platform. The VLlW part is tuned for running scalar and control code. It is not meant for running heavy data processing code. The VLlW processor 21 includes several FUs 32 and at least one multiport register file 30, as in typical VLlW architectures, but in this case the VLIW processor 21 is also used as the first row of the reconfigurable array. Some FUs 32 of this first row are connected to the memory hierarchy 33, depending on the number of available ports. Data accesses to the memory of the unified architecture are done through load/store operations available on these FUs 32. When compiling, with a compiler, applications for an architecture according to embodiments of the present invention, loops are modulo-scheduled for the CGA 22 and the remaining code is compiled for the VLIW 21. By seamlessly switching the architecture between the VLIW mode and the CGA mode at run-time, statically partitioned and scheduled applications can be run on the CGRA instance according to embodiments of the present invention with a high number of instructions-per-clock (IPC).

To remove the control flow inside loops, the FUs 26, 27, 28support predicated operations. The results of the FUs can be written to data storages such as the distributed RFs 29, 35, i.e. RFs 29, 35 dedicated to a particular functional unit 26, 27, which RFs 29, 35are small and have fewer ports than the shared data storage such as register files 30, which is at least one global data storage shared between a plurality of functional units 26, 27, 28, or the results of the FUs 26, 27, 28 can be routed to other FUs 26, 27, 28. To guarantee timing, the outputs of FUs 26, 27, 28 may be buffered by an output register. Multiplexers are part of the routing resources for interconnecting FUs 26, 27, 28 into at least two non-overlapping processing units. They are used to route data from different sources.

FIG. 2 illustrates a microcomputer architecture 20 according to embodiments of the present invention. The embodiment illustrated comprises a 3-issue VLlW processor 21 and a 3x5 CGRA 22. The CGRA 22 is separated into three parts 23, 24, 25. The first part 23, formed by the upper two rows of FUs 26 of the CGRA 22, contains as an example six 32-bit FUs 26. These may be used for scalar data processing such as address calculations and loop control. The second part 24, formed by the lower two rows of FUs 27 of the CGRA 22, contains as an example six 256-bit FUs 27. These may be used for handling the data processing by executing 256-bit SIMD instructions on vectors with 16 elements of 16bit. The third part 25, formed by the middle row of FUs 28 of the CGRA 22, contains as an example three FUs 28. These may be used for handling the communication between both datapaths by executing shuffling and packing instructions. Of course the number and distribution of types of FUs 26, 27, 28 in the CGRA 22 can take on any suitable form. An optimal distribution of FUs 26, 27, 28 may be selected for a particular microcomputer architecture according to embodiments of the present invention, e.g. taking into account reduction of the number of functional units in the scalar path, reuse of FUs, and specialization of FUs.

The microcomputer architecture 20 according to embodiments of the present invention comprises a plurality of memories. The first memory 31is a memory with the same width as the scalar functional units 26, e.g. a 32-bit memory. The first memory 31 may comprise a plurality, e.g. 4 in the embodiment illustrated, of memory banks. This memory 31 is connected to a plurality of FUs 26 in the scalar datapath, e.g. 4 FUs 26 in the embodiment illustrated, as well as to the VLlW functional units 32. In addition, the CGRA instance according to embodiments of the present invention comprises also at least one, for example a plurality of scratchpad memories 34, e.g. two scratchpad memories 34, each connected only to one FU 27 in the array. Therefore, no DMQ is needed by those two scratchpad memories 34 resulting in power and area savings. In order to still enable a high memory throughput, both memories 34 support only wide memory accesses loading/storing vectors of for example, but not necessarily, the same width as the FUs 27 of the second part 24, e.g.256bit. Moreover, these vector loads and stores reduce the number of packing and unpacking instructions needed for the vector processing resulting in performance gain. The idea is that computation is kept highly parallel in vector datapath and the scalar datapath is used mainly for address computation or for the part of the algorithm where highly parallel DLP cannot be used (e.g. tracking in WLAN).

A CGRA architecture may be split up into partitions. A partition is an arbitrary grouping of resources of any size: a partition can be a single FU, or it can comprise a plurality of FUs, RFs, memories, ... Each partition can be viewed as a downscaled CGRA architecture and can optionally be partitioned further down the hierarchy. Each partition can simultaneously execute a programmer-defined thread (multi-threading).

Each thread has its own resource requirements. A thread that is easy to parallelize requires more computation resources, thus executing it on a larger partition results in the optimal use of the ADRES array and vice versa. A globally optimal application design demands that the programmer knows the IPC of each part of the application, so that he can find an efficient array partition for each thread.

One way to find out how many resources are required by each part of a certain application is profiling. A programmer starts from a single-threaded application and profiles it on a large single-threaded CGRA architecture. From the profiling results, kernels with low IPC are identified as the high-priority candidates for threading. Depending on the resource demand of the threads, a programmer may statically plan on how and when the CGRA should be split into partitions during application execution. When the threads are well organized, the full array can be optimally utilized.

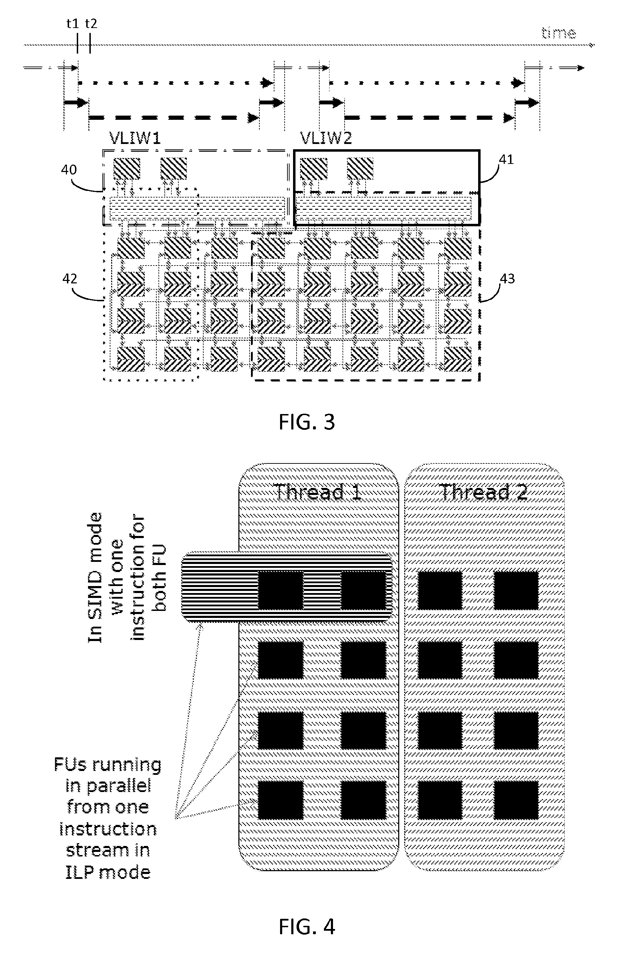

A thread is always started/stopped (in other words: operated) using a VLlW processor 21. Each VLlW processor 21 can start and stop a new thread independently of each other. When a VLlW processor 21 starts a thread, it claims a set of FUs 26, 27, 28 from the CGRA FUs, which can then operate in a synchronous fashion to execute a thread. Furthermore a VLlW 21 can also spawn threads to other VLIWs. For example VLIW1 spawns two threads, where each thread claims a set of mutually exclusive resources from the CGRA FUs and memories. Each of the two threads run on say VLlW1 and VLIW2 respectively. This example is shown in FIG. 3.

FIG. 3 shows two VLIWs 40, 41. At the start, at point t1 in time, the first VLIW 40 starts a thread from the "claimed" CGA resources indicated by the dashed box 42. The full arrow at the top of the drawing, before and up to t1, illustrates that the thread is in VLlW mode. As from t1, the first thread is in CGRA mode, as illustrated by the dashed arrows. At some (potentially other) point t2, the second VLlW 41 independently starts another thread from the "claimed" CGA resources indicated by dashed box 43. The second line of full and dashed arrows at the top of the drawing illustrate when the thread is in VLIW resp. CGRA mode. A similar "claiming" of resources can also be done for data memories for the different threads. In this case two independent instruction streams run on the array of FUs. It can be seen from FIG. 3 that part of the array may not be used, in the example illustrated for example the third column of FUs.

Furthermore there can be another example (not illustrated) where the first VLlW VLIW1 spawns two threads, and where two sets of CGA resources and data memory claims are made for the two threads. However, these threads are run independently of each other and there is a "join" after the two threads finish executing.

Threads may communicate with one another, either via a shared memory or via FIFO or other mechanisms.

Resources can be reserved at compile time, where the code of the VLlW processor defines the thread(s) and its (their) resources required on the CGA. For example, a first VLlW processor can invoke one of the two options: option 1 where code 1 is run on a CGA with resources set with X functional units and P memories, or code 2 which is functionally the same or different with resources set with Y functional units and Q memories. At runtime, the preferred option is selected, based on the application requirements and the environment, i.e. the current usage of resources for other applications which are running.

In embodiments of the present invention, the CGA functional units may have different modes of operation:
1. In an instruction level parallelism (ILP) fashion: A set of FUs which are in control of a single thread are running in parallel in an instruction level parallel way. In other words, in one cycle, each FU has a separate set of instructions but from the same instruction stream, which execute independent of the other FU. The scheduling can be done using techniques like modulo scheduling, as described by B. Ramakrishna Rau in "Iterative Modulo Scheduling", HPL-94-115, November 1995.
2. In a thread level parallelism (TLP) fashion: Each set of FUs can be in control of different threads. Therefore the FUs run independent of each other but in control of different threads. Therefore the different FUs get separate sets of instruction streams, as also described by Tom Vander Aa et al. in "MT-ADRES: An energy efficient multi-threaded processor for wireless baseband", Proc. Of 9th IEEE Symposium on Application Specific Processors, IEEE, 2011-05-06, San Diego, 5-6 June, 2011.
3. In a data level parallelism (DLP) fashion: If a set of FUs can perform the same operation, they can also be synchronously operated in a data level parallel way where the same instruction is fed to the different FUs so that they operate in a SIMD like fashion. These FUs could also be combined to operate in a higher precision mode. For example, two 16-bit adders could be combined to perform either two parallel 16-bit additions in parallel or a 32-bit addition. Therefore the different FUs get the same instruction from the same instruction stream.
4. And any mix of the above: It is also possible to mix the above ILP, DLP and TLP fashions. For example, there can be two threads where each thread has claimed 8 FUs. In thread one FU1, FU2 are combined in DLP mode and there is an operation of 7 FUs in ILP mode ("FU1-FU2", FU3, FU4, FU5, FU6, FU7, FU8). This is example is shown in FIG. 4. When exploiting the ILP, DLP and TLP, in an application the most efficient form of parallelization DLP would be used followed by ILP and followed by TLP when performing the mapping. More details on the best order for DLP, ILP and TLP are explained by M. Palkovic et al. in "Future Software-Defined Radio Platforms and Mapping Flows", Signal Processing Magazine, IEEE, March 2010.

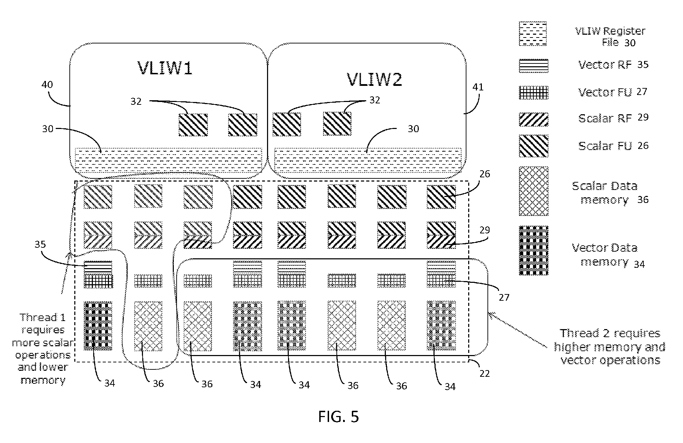

As indicated with respect to FIG. 2, in accordance with embodiments of the present invention the CGRA 22 comprises heterogeneous functional units 26, 27, which have different instruction sets. For example, FIG. 5 shows a CGRA 22 with different memory types 34, 36 and also some FUs 27 that support vector operation and some scalar FUs 26, arranged and connected in a particular way. Based on the application to be run on the architecture, and its properties and requirements, a selection can be made of the type of resources and the number of them required for running a particular thread. For example, if a first thread Thread 1, executed on a first VLIW processor 40, requires mostly scalar operations and lower memory, a selection of FUs an memory may be made that satisfies the requirement of the thread. On the other hand, a second thread Thread 2, executed on a second VLlW processor 41, is illustrated in FIG. 5. This second thread is highly vector intensive and highly memory bandwidth intensive in its requirement. Therefore, as an example, an allocation of resources as shown in FIG. 5 may be made for Threads 1 and 2, respectively. This allocation, in accordance with embodiments of the present invention, is based on the requirements of the application to be executed on the CGRA, as well as on the environment, i.e. the current usage of resources such as FUs and memories already claimed for executing one or more other threads.

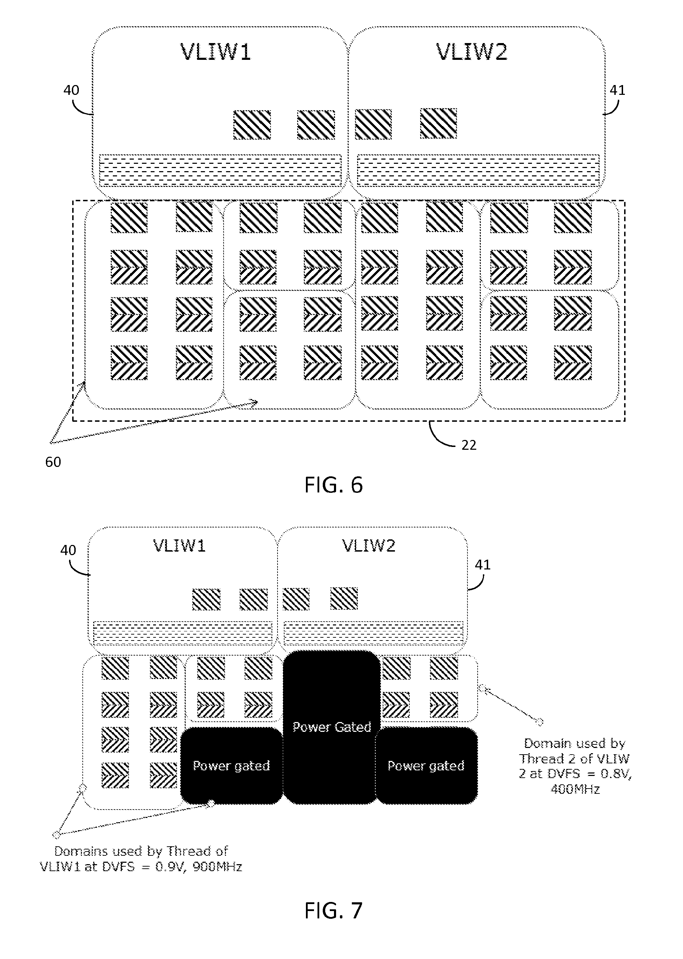

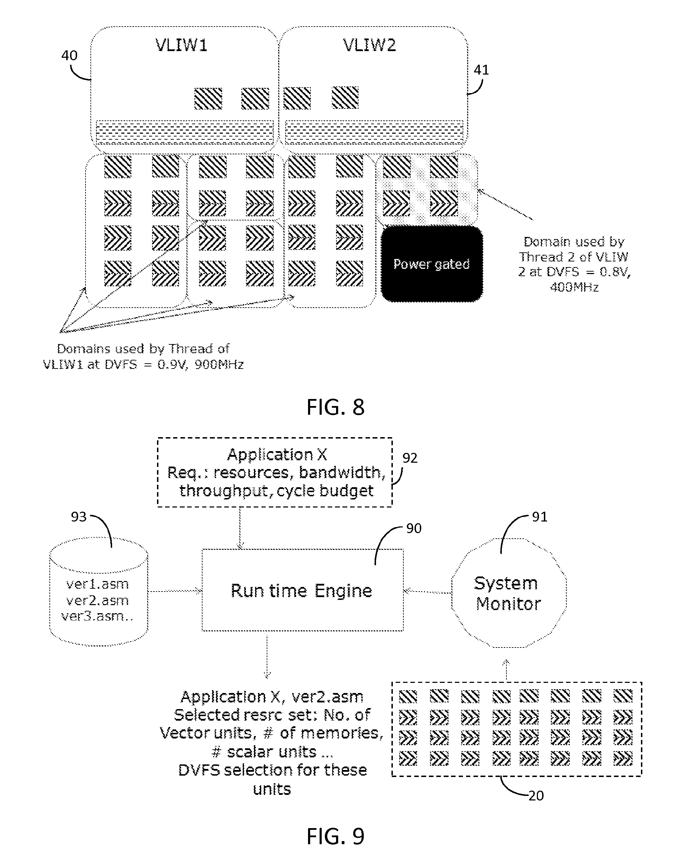

According to further embodiments of the present invention, a set of FUs and register files and memories may belong to a dynamic voltage and frequency scaling (DVFS) domain, and the voltage and frequency of this domain can be controlled independently of the voltage and frequency of another domain. A set of FUs, register files and memories also can belong to a power domain which can be switched on and off independently from another power domain as well. Therefore, in accordance with embodiments of the present invention, when a VLlW processor 40, 41 claims a set of resources, it can also set the voltage and frequency of the appropriate domains that it claims. FIG. 6 shows an example of different power and DVFS domains 60 in the CGRA 22. It is to be noted that the unused power domains can also be power gated to go to a low leakage mode (fully power gated, sleep or deep sleep mode), as illustrated in FIG. 7 and FIG. 8. While memories are not shown in these drawings, a similar principle power and DVFS domains may be extended to data and configuration/instruction memories as well. Furthermore based on such groups clock gating may also be performed.

Based on the demand of the application to be executed, and on the current utilization of the CGRA as mentioned earlier different resource combinations and modes can be claimed. FIG. 7 and FIG. 8 show two examples of two threads, which claim different sets of FUs and register files and memories with different DVFS requirements of the application. This allows each thread to efficiently use the resources based on the computational requirement of the thread as well as availability of the resource based on the current state of use of the CGRA 22. FIG. 7 and FIG. 8 show a first domain used by the thread executed by VLlW1 40 at DVFS = 0.9 V at 900 MHz, and a second domain used by the thread executed by VLlW2 41 at DVFS = 0.8 V at 400 MHz. Unused domains are power gated to reduce power consumption. When comparing FIG. 7 and FIG. 8 it can be seen that, in accordance with embodiments of the present invention different sets of resources can be combined for executing one thread, depending on the requirements of the thread and the environment.

A microcomputer architecture according to embodiments of the present invention can fully support runtime reconfiguration and multistream capability and a combination of those. Under multistream capability is understood that two asynchronous streams (e.g. LTE - Long Term Evolution, and WLAN - Wireless Local Area Network) are running in parallel on the platform, e.g. in a master-master mode. Under runtime reconfiguration is understood that the resources for a configured stream (e.g. LTE) can be reconfigured (e.g. to WLAN). This is linked to handover mechanisms. The reconfigurability can be internal and external, where external means re-loading the new standard to an L2 instruction memory and where internal means that within the microcomputer architecture according to embodiments of the present invention the appropriate modulation and coding scheme (MCS) is loaded to an L1 instruction memory either via caching mechanisms (for the VLIW part) or via direct memory access (DMA) (for the CGA part).

The run-time reconfiguration enables also run-time adaptation of a same algorithm, where several versions of the same algorithm representing a trade-off, such as for example a Pareto trade-off,(e.g. between the energy and time) are available. Those different versions of the same application are compiled and kept in the higher levels of instruction memory. This may be different programs compiled for different allocations of resources, or different DVFS settings etc.

When a new application is started, a run-time engine 90 (illustrated in FIG. 9) can co-operate with a system monitor 91 to first monitor the system 20 on the current situation of the system on the occupation of resources (e.g. FUs, memories). In accordance with embodiments of the present invention, based on the result of the system monitor 91 and on the exact application requirements92 of the new application, the run-time engine 90 selects a particular version of the precompiled software from a higher level of instruction memory 93 which is loaded to the configuration memory on the CGRA for execution. Such particular version includes the selection of resources, such as number of scalar and/or vector FUs, DVFS for the selected FUs, number of memories. When the runtime situation changes, the run-time controller 90 can select from the instruction memory 93 another version of the same algorithm that suits better the current situation needs.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

## Claims

1. A microcomputer architecture for executing an application, the microcomputer architecture comprising
a plurality of functional units, and memories arranged so as to form a coarse grain array,
at least one processing unit supporting multiple threads of control, the at least one processing unit being adapted for allowing each thread of control to claim one or more of the functional units to work for that thread,
wherein the at least one processing unit is adapted for allowing the threads of control to claim functional units to work for that thread depending on requirements of the application and/or the environment.

2. A microcomputer architecture according to claim 1, wherein the processing unit being adapted for allowing the threads of control to claim functional units includes claiming particular types of functional units depending on requirements of the application and the environment.

3. A microcomputer architecture according to any of the previous claims, wherein the processing unit being adapted for allowing the threads of control to claim functional units includes claiming a particular number of functional units depending on requirements of the application and the environment.

4. A microcomputer architecture according to any of the previous claims, wherein a set of functional units and memories belong to a DVFS domain, and the voltage and frequency of this domain can be controlled independently of another domain.

5. A microcomputer architecture according to any of the previous claims, wherein a set of functional units and memories belong to an adaptive body biasing domain, and body biasing of this domain can be controlled independently of the body biasing of another domain.

6. A microcomputer architecture according to any of the previous claims, wherein a set of functional units and memories belong to a power domain which can be switched on and off independently of another domain.

7. A microcomputer architecture according to claim 6, wherein power domains are adapted to be power gated to go to a low leakage mode.

8. A microcomputer architecture according to any of the previous claims, wherein the processing unit is adapted for allowing each thread of control to reconfigure the claiming of one or more of the functional units to work for that thread at runtime.

9. A microcomputer architecture according to claim 8, wherein the reconfiguration enables run-time adaptation of a same algorithm, where several versions of the same algorithm representing a trade-off between two parameters are available.

10. A method for executing on a system comprising a plurality of functional units arranged so as to form a coarse grain array an application having multiple threads of control, the method comprising
monitoring a runtime situation of the system with respect to the occupation of the functional units, and
based on the occupation of the functional units and on application requirements, allowing the threads of control to claim different functional units to work for that thread.

11. A method according to claim 10, furthermore comprising, when the runtime situation changes, selecting another precompiled version of the same application that suits better the current situation needs.

12. A method according to any of claims 10 or 11, wherein allowing the threads of control to claim different functional units to work for that thread includes claiming sets of functional units to work in an instruction level parallelism fashion, a thread level parallelism fashion, a data level parallelism fashion or a mix of two or more of these fashions.

13. A run-time engine adapted for monitoring a system comprising a plurality of functional units arranged so as to form a coarse grain array, the system running an application having multiple threads of control loaded on the CGRA for execution, the run-time engine being adapted for monitoring the system with respect to the current occupation of the functional units and application requirements, and based on the occupation of the functional units and on the application requirements, selecting different functional units to work for a thread of control.

14. A method for converting application code into execution code suitable for execution on a microcomputer architecture as in any of claims 1 to 9, the method comprising:
- obtaining application code, the application code comprising at least a first and a second thread of control,
- converting at least part of said application code for the at least first and second thread of control, said converting including providing different versions of code for making use of different sets of resources, and insertion of selection information into each thread of control, the selection information being for selecting a different version of code, depending on requirements of the application and a particular occupation of the functional units.

15. A method for executing an application on a microcomputer architecture as defined in any of claims 1 to 9, the method comprising
executing the application on the microcomputer architecture as at least two process threadson a first set of at least two non-overlapping processing units,
depending on the current occupation of functional units in the first set of at least two non-overlapping processing units and on requirements of the application, dynamically switching the microcomputer architecture into a second set of at least two non-overlapping processing units, the second set being different from the first set, and
executing the at least two process threads of the application on the second set of at least two processing units.
